# EUROPEAN PATENT APPLICATION

(11) **EP 3 572 994 A1**
(43) Date of publication of application: **27.11.2019**
(21) Application number: 19172901.1
(22) Date of filing: 07.05.2019
(51) Int. Cl.: G06Q 10/06

(54) **PROCESSING CONTRACTUAL TEMPLATES OF MODELLED CONTRACTS FOR TRAIN SYSTEMS**

(30) Priority: 21.05.2018 US 201815984506
(71) Applicant: Siemens Aktiengesellschaft, 80333 München (DE)
(72) Inventor: Joanni, Andreas, 80337 München (DE); Ratiu, Daniel, 80997 München (DE)

(57) **Abstract**

The present invention refers to a computer-implemented approach with methods, systems and programs for automatically optimizing a set of contractual template instances for a contract for a technical system between contracting parties. The method accesses (S1) a modelling unit (M), which is adapted to provide modelled contracts with a set of contractual templates (ct), wherein each contractual template (ct) has a set of parameters and a set of constraints. A synthesizer (S) is accessed for synthesizing (S3) a set of contractual template instances (cti) which comply with the received constraints values (v). Finally, an evaluation engine (E) is accessed with received optimization criteria for optimizing (S4) the set of synthesized contractual template instances in order to calculate at least one optimized contractual template instance as a result (r).

## Description

The present invention relates to a method, system and computer program for calculating optimized contractual template instances for a contract relating to a technical system.

During the course of development and delivery of a complex technical system, usually several contracts have to be generated for different contractors (e.g. providers, customers and suppliers), all relating to the technical system and its requirements. Technical systems (like e.g. railway systems) need to comply with technical requirements, inter alia with respect to reliability, availability and maintainability (RAM) and many others. This, in turn, requires and is reflected in corresponding and appropriate contractual conditions (e.g. costs, maintenance intervals, warranties, penalties) .

Usually, there is no single technical solution, but a set of different contractual stipulations is possible. For determining the best technical solution different optimization criteria have to be applied to determine the best solution for the respective situation.

In a complex technical system, like a railway system, many subsystems' constraints and technical requirements need to be detected as well as all the contracting parties interests (which may be conflicting) in order to determine the best technical solution taking into account all the different influences and based on that determining the corresponding contractual conditions.

In state of the art systems, the mapping between actual constraints for the technical system and the contractual requirements was analyzed manually, which leads to the risk of inadequate, suboptimal, incomplete or flawed implementation and, therefore, erroneous analysis results. This in turns leads to missed technical opportunities or solutions which do not maximize the potential for all parties.

It is an object of the present invention to provide a method, system and a computer program for automatically processing and evaluating possible contractual instances which comply with received constraints. In general, the determination and optimization of contractual instances should be automated and improved. Further, different optimization criteria shall be applicable for calculation of the best contract instance. This object is achieved by the subject matter according to the independent claims with the claimed features. Advantageous embodiments are the subject matter of the dependent claims, the description and the figures.

According to a first aspect the present invention refers to a computer-implemented method for automatically solving a complex decision task, namely by executing a decision algorithm for automatically calculating optimized contractual template instances for a contract for a technical system (e.g., a train) between respective contracting parties. The method comprises to access a modelling unit, which is adapted to provide modelled families or variations of contracts with a set of contractual templates. Each contractual template has parts which are fixed, representing commonalities of several contracts. Variation points are captured as a set of placeholders (parameters) which can be filled in with concrete values. In addition to this, a template has a set of constraints (representing interdependencies of valid combinations of parameter values). The constraints are expressed and processed as formula in predicate logics. The method continues with providing a parameter interface for receiving values for the parameters (from each of the (respective) contracting parties for a given or an 'intended' contract - 'intended', because the contract is to be prepared and is not yet generated). Thereinafter, a synthesizer is accessed for synthesizing a set of contractual template instances which instantiate the parameters with values such that they comply with the received constraints. The method comprises a step, which also may be executed earlier, which is adapted to receive optimization criteria. With these (received) optimization criteria an evaluation engine (which has the functionality of an optimizer) is accessed with the received optimization criteria for optimizing the set of synthesized contractual template instances in order to calculate at least one optimized contractual template instance as a result.

The invention is based on the idea to modell contracts formally by using contract templates. A template is to be construed as a digital form or mask which comprises placeholders (variables) for certain values and a set of constraints about valid combinations of the values for the placeholders. For definition of such a template, pre-defined rules and a rules engine may be applied. Domain experts extract commonalities and variation points of their contracts. Commonalities are reflected by the static part of the template whereas variation points by a set of placeholders (parameters). The set of templates is used to modell contract families formally in a digital form so that they are processable electronically by means of computer processing. The method comprises to provide a parameter interface for receiving or providing values for placeholders (i.e. parameters) and constraints. Further, the process of determining valid contractual template instances, which comply with given or received constraints and requirements, should be improved and automated by executing an algorithm on the synthesizer. Moreover, the optimization criteria are manifold and the task to find an optimal contractual template instance is a highly complex task which should be resolved algorithmically by means of using an evaluation engine.

A contract is an instantiation of a template with concrete values for placeholders. A company has only one master template (the most generic) for a family of products and offerings. This master template captures commonalities and variation points of different offerings. The master template can be instantiated partially (i.e. some abstract placeholders are filled in with concrete values, new constraints are added) to reflect specifics of the technical system and business (e.g. for low cost markets, for different parts of the world where different standards or regulations apply).

Contract templates capture the portfolio (technical solution, servicing, offerings, financial) which a company has for a product (e.g. a train system, servicing of the technical system post commissioning, etc.). Contract templates are created by teams of technical experts, domain experts (e.g. business developer, portefolio manager) together with marketing experts (e.g. global/regional sales, account managers for different customers) and represent the capabilities of the company offerings at a certain point in time. In an ultimate vision, all contracts entered by a company should derivable from a "master template". If a new customer has requirements NOT covered by the "master template" and the company can fulfill these requirements, then the "master template" should be extended with additional clauses, variation points and constraints such that the new requirement is accommodated.

Preferably, the contract templates are designed to be used for input of the parameter values so that the user will automatically be guided in his input process?

It is to be noted, that the sequence of method steps mentioned above and/or claimed may be changed. For example, the step of receiving values for the parameters may be executed after the step of receiving optimization criteria or another sequence may be executed.

In a preferred embodiment, the contractual template is parameterized and comprises mutual dependencies between modelled contractual conditions with implications on the technical system, e.g. a train system. A contractual template thus comprises placeholders for certain criteria and constraints of the technical system, like e.g. "If quality of support unit is > "Threshold x" then costs of the train system will raise by amount "y €" and the warranty can be prolonged up to "Z months" assuming maintenance intervals of "Q days" and utilization degree of "R hours per year" under environmental temperatures between "A-B Degrees Celsius". The placeholders, their values and constraints can be very complex and interdependent. Also, a placeholder might reference the need of entering additional contracts - e.g. warranty is X only if servicing is done by a specific company. Reliability characteristics of components and use degree depend on the operation conditions like e.g. in which part of the world a train operates. Another constraint could disallow certain technical solutions (e.g. use of equipment of certain suppliers) to be delivered in certain parts of the world (e.g. due to embargos). With this feature, a more detailed modelling is possible.

In another preferred embodiment, the offering can be itself a contractual template. In this case the "offering" represents a family of classical offers and the customer has the possibility to choose the offer which addresses its needs in the best way.

In another preferred embodiment, each of the contractual templates represents different configurations of the technical system, like e.g. high or low quality configurations, a maintenance level and/or a mean time to failure (MTTF). This has the advantage that a huge variety of contractual conditions for the technical system may be provided and processed digitally.

In another preferred embodiment, and in the case of contracts with multiple (partly overlapping) suppliers, certain values of placeholders simply rule out the choice of a certain supplier. In this case the selection of suppliers can be automated. Furthermore, the contract templates of the selected supplier would have pre-filled values for certain placeholders while leaving the others at the discretion of the supplier. In this manner a *global optimum* for the total offering can be reached. For example, if a train is supposed to run only in Germany, then the safety systems contracted from a supplier A can be restricted to the needs of Germany. No need to integrate functions/components/services which the end-customer does not need.

In another preferred embodiment the contractual template is functional in that it may be used by a processor by generating masks for (user) input of values for parameters and constraints, and its interrelations and interdependencies (e.g. if the user has decided to input a low value for a COST constraint, then he only will be provided with other constraints, which will match to this low cost input, like e.g. corresponding low values for maintenance intervals and supervision of the technical system). With this data, it is possible to provide a set of contract template instances, which are constraint compliant by construction. This means that the contractual template is interactive so that user interaction with the template is possible, i.e. user may input values for different parameters so that the specific contractual template instance may be generated dedicatedly for the specific use case. The template may, thus, serve as a user interface mask. Precisely, the checking engine can interactively run and support the user (e.g. sales person) in the creation of contract instances which are up front guaranteed to comply with the template.

In another preferred embodiment the contractual template instance is generated by using stored rules of a rules engine and a stored decision logic, based on the contractual templates received from the modelling unit.

In another preferred embodiment, the sequence of electronic forms is generated dynamically in dependence of input of (e.g. parameters) values such that electronic forms are generated in dependence of prior input of the respective values. With this feature, the user is directed and guided in a provided working flow or process flow.

In another preferred embodiment, calculating at least one optimized contractual template instance in the evaluation engine is executed by applying an evaluation algorithm, which may execute a predefined optimality function. In particular, the evaluation algorithm is designed to find a pareto front (or frontier) for all offerings. The customer can subsequently choose an offer (contract instance) which fits its needs at best. Pareto front algorithms are described in Kung, H. T.; Luccio, F.; Preparata, F.P. (1975). "On finding the maxima of a set of vectors". Journal of the ACM. 22 (4): 469-76. doi:10.1145/321906.321910 and in Godfrey, P.; Shipley, R.; Gryz, J. (2006). "Algorithms and Analyses for Maximal Vector Computation" (PDF). VLDB Journal. 16: 5-28. doi:10.1007/s00778-006-0029-7. For providing a sufficient disclosure for these algorithms, the content of these papers is explicitly incorporated.

In another preferred embodiment, the values for the parameters comprise configuration parameters for the technical system and particularly are selected form the group consisting of a mean time to failure parameter (MTTF), a cost parameter, a warranty parameter and an availability parameter, parameters reflecting operational conditions, parameters reflecting different quality of service attributes, parameters reflecting financial liabilities (e.g. warranties, penalties/bonuses) .

In another preferred embodiment, a warning message is issued in case of incompatible constraints and/or constraints values and/or in case of violation with pre-definable security and safety requirements of the technical system. This has the advantage that security of the method may be improved and that the user may be informed as early as possible in the contractual decision process in case of incompatibility of input data. For example, if the user defines "quality should be as high as possible" and in parallel also defines "costs should be as low as possible" then an incompatibility message would be generated, giving the user the opportunity to change or reset the input of the respective value.

The invention further refers to a computer program, tangibly embodied in a machine-readable storage medium, including instructions operable to cause a computer to perform the method steps according to any of the method claims above, if the computer program is executed on a processing device.

Finally, the invention also refers to a contract optimization system for automatically calculating optimized contractual template instances for a contract for a technical system between contracting parties. The system comprises:
- An interface to a modelling unit, wherein the modelling unit is adapted to modell contract families, for providing a set of contractual templates, wherein each contractual template has or is represented by a set of parameters and constraints;
- A constraint interface for receiving values for parameters;
- A synthesizer which is adapted to access the modelling unit with received values for parameters to synthesize a set of contractual template instances which comply with the received values;
- An optimization interface for receiving optimization criteria;
- An evaluation engine (which acts as optimizer and) which is adapted to be executed with the received optimization criteria for optimizing the set of contractual template instances in order to calculate at least one optimized contractual template instance as a result.

In a preferred embodiment of the contract optimization system, the technical system is a traffic engineering system and in particular a railway system.

In the following a short definition of terms is given, which are used in this application.

There may be two or more contracting parties. Each of them typically has different requirements. Customers and suppliers of technical subunits may serve as contracting party, wherein the customers have requirements and the suppliers have offers (e.g., for which price they are willing to enter into the contract). Both requirements and offers are captured as contracts: between customers and system integrator on the one hand and between the system integrator and suppliers on the other hand.

A contractual template is a digital data structure for an electronic representation of contract families, in which parameters serve as placeholders, so that different concrete values may be applied (e.g. the parameter 'COST' may have different values '1000€', '2000€' etc.). A contractual template may be represented by means of a set of contractual parameters (parameter values) and constraints and is stored in a memory of the modelling unit. The contractual templates define a contract space in which interdependencies, rules and a contractual activity flow are represented in a synchronized and/or coordinated manner. Each of the contractual templates satisfies a set of (different, unique) requirement data and synchronization parameters.

A contractual template instance is a concrete instantiation of the contractual template data structure. A contractual template instance thus relates to a concrete configuration (i.e. instantiated templates with concrete values). A contractual template can also be instantiated only partly - i.e. for some placeholders' concrete values are selected while other placeholders are left as such. For example, many times the offerings and products are customized for different parts of the technical system. The company then has a master template for its entire portfolio and specific templates for different parts of the technical system (e.g. for different geographical areas: Western / Eastern Europe, South-America).

Constraints may be represented by a dataset, which comprises rules and conditions with respect to the concrete values of parameters. The constraints are logical formula over the values of parameters used as placeholders in the templates. Constraints delimit the space for valid or possible contracts. The rules and conditions may be defined via a user interface. For the purpose of clarity, the set of interrelating constraints with its values is abbreviated in this application by the term "value". The value, however, is to be construed as a complex data structure comprising the rules and conditions to be applied. A value usually in not only a digital figure or rate but is more complex.

The modelling unit is a computing unit which is adapted to provide modelled contracts in a formalized form, which are processable automatically by means of algorithms. The modelling unit provides a set of contractual templates and has an interface (i.e. an application programming interface API) to be accessed. The modelled contracts with the contractual templates may be interactive.

The synthesizer is an electronic unit, which may be deployed in hardware and/or in software and which serves to determine and synthesize a set of contractual template instances, which meet set or user-defined criteria, in particular with constraints and parameter values.

The evaluation engine is likewise an electronic unit, which may be deployed in hardware and/or in software and which serves to optimize the intermediate result with the set of synthesized contractual template instances in order to calculate a result with at least one optimized contractual template instance by applying current and the latest optimization criteria. Thus, the result is automatically adapted, based on newly received optimization criteria. In a preferred embodiment, the evaluation engine executes an evaluation algorithm, which may be designed to find a pareto frontier for different optimization criteria.

The values for the constraints may be defined on a case-to-case basis and may be selected by a user from a pre-defined constraints set. The values comprise configuration parameters for the technical system, like inter alia a mean time to failure parameter (MTTF), a cost parameter, a warranty parameter, an availability parameter, maintainability (e.g. repair times), future operating constraints (e.g. maintenance intervals), constraints to regions in the world where the product is allowed to be deploys (e.g. embargos, local suppliers), environmental conditions (prescribed operating temperatures).

The contractual templates are based and defined by particular requirements, relating to the technical system. The requirements are - in a preferred embodiment- non-functional requirements. They may comprise quality and/or performance requirements and they may be described in contracts. The requirements relate to the technical system and may define a reliability value, an availability value and/or a maintainability value of said system, or other performance requirements like output yielded by said system. The requirements may serve as performance indicators and are - according to a preferred embodiment of the invention - used as performance indicator. Thus, requirements are processed in combination with the system's performance measure. Assessment of the degree of compliance with requirements may necessitate a quantification of the effect of random failures on the performance of the technical system. In case the technical system does not comply with the defined requirements, the resulting impact is (according to a preferred embodiment) quantified. The impact may comprise penalties or costs for non-compliance with requirements. The impact may also comprise negative side effects with other systems. The requirements describe what the technical system is supposed to do (operating a railway system in a specific operational mode, operating without unplanned interruptions, yielding a certain product output, processing data, control technical entities, regulate the temperature etc.). Further, the requirements describe how to operate or run the technical system (logging functionality, startup/shutdown controls, monitoring, resource consumption, back up, availability etc.). Further, the requirements describe how the system is built (which technical entities, the number of technical entities, the degree of redundancies, the quality of the technical entities, which data processing system, which language for processing data, which operating system and what kind of standards to be adhered to etc.). In another preferred embodiment the requirements may be functional or operational (technical).

The technical system is a complex system and may be a traffic engineering system and in particular a railway system. The system is build up by different modules which are interrelated (e.g. the railway network system, the trains, a control system for the driven trains etc.). The technical system integrates different subsystems and must comply with requirements from different parties (e.g. suppliers, customers etc.). Alternatively, the technical system may refer to a power plant or to an energy system or another complex electrical system.

Modelling is a process which transforms a real physical or technical system or measurement data thereof in an abstract model, which may be processed by a computer, with software and hardware. In this context requirements for the technical system and the system itself are modelled jointly in one common model and therefore may be processed in a formalized manner in a fully automated version by means of a computing device. By using a modelling technique, the advances in information technology can generate an information gain and completely new opportunities and hence influence the design of specific business process layouts for the technical system, because inter alia it is possible to filter out the irrelevant complexities of the real world, so that efforts can be directed towards the most important parts of the technical system. Benefits of aligning the design of technical development of the technical system and related business processes with the design of their corresponding Information Systems is apparent. Further, according to an embodiment of the invention, requirements may be processed which involve time-dependent criteria and complex interrelations between different aspects (parameters) of the processed requirements.

Synthesizing, optimizing, calculating are computer-based, fully automatic processes, which preferably are hidden for the user and are executed by means of algorithms on a machine. Thus, typically, besides the input of values and optimization criteria the processes are executed without any user interaction and in a fully automated manner on a computing device, which may be a processor, a computer, a computing network or a cloud system.

The computer program may be processed in a distributed manner, such as that certain steps are performed on a first computing entity and that other steps are performed on a second computing entity.

The computer program may be offered, placed on market, used, imported and/or stored as (and thus may be part of) a computer program product. Thus, the computer program may be provided on a storage medium (computer readable medium, like a computer disc or a memory stick etc.). Alternatively, the computer program may be provided via download by means of a respective network connection to a server, which stores the computer program by providing a link to the server with the computer program stored thereon. A "computer-readable medium" or "storage medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a non-exhaustive list) of the computer-readable medium can include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM).

The term "computer" refers to any electronic device comprising a processor, such as a general-purpose central processing unit (CPU), a specific purpose processor or a microcontroller. A computer is capable of receiving data (an input), of performing a sequence of predetermined operations thereupon, and of producing thereby a result in the form of information or signals (an output). Depending on context, the term "computer" will mean either a processor in particular or can refer more generally to a processor in association with an assemblage of interrelated elements contained within a single case or housing.

The systems and methods described herein are not executable manually, because the data processing (in particular the optimization) is far too complex and too many data need to be considered. Thus, the systems and methods described herein are embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which include storage devices and signals, in compressed or uncompressed form.

The following detailed description of the figures uses the drawings to discuss illustrative embodiments, which are not to be construed as restrictive, along with the features and further advantages thereof.

In the drawings:
- Fig. 1: shows in a schematic drawing of a contract optimization system in an overview; and
- Fig. 2: shows another embodiment of the contract optimization system, depicting some alternatives; and
- Fig. 3: shows a flow chart of a method for providing a set of optimized contractual template instances according to a preferred embodiment of the present invention.

### Detailed Description

Manufacturers of technical systems, like the Applicant, regularly enter into contracts, or participate in call for tenders, that involve engineering, manufacturing, delivery and servicing of large, complex systems that typically have a large financial project volume, and/or may involve contractual obligations over long periods of time. In order to realize these complex systems, the manufacturers often act as an integrator (e.g. as OEM), and enter into complex contracts with suppliers for different components of the system. Both contracts with suppliers as well as the ones with customers depend on a wide range of parameters regarding technical aspects of the project like technical configuration and technical characteristics, possibly in combination with guaranteed performance or other non-functional characteristics, which in total determine financial aspects related to costs (both the initial cost of the system and the costs overall during the life-cycle), penalties or warranties. Usually, there is no single technical solution and fixed contractual stipulation that a manufacturer of a technical system can propose to satisfy the needs of a specific customer of a complex project, but there is rather a space consisting of possible technical solutions and offerings that are equally good from the manufacturer's perspective - however, for the customers one particular technical solution and financial offer can be more beneficial than other offerings which can be made.

Answering this question and finding the best solution in the particular case cannot be solved "manually", "by thinking", but needs computer processing in order to solve the decision task considering multiple optimization criteria which have interdependencies. The invention suggests an approach to provide such a computer-implemented automatic solution by means of providing modelling and algorithmic means.

Difficulties that are typically encountered in negotiation situations include:
- Contractual requirements and corresponding financial impact (e.g. potential penalties and other costs) are often defined by complex contractual agreements involving a large set of parameters (e.g. price, guaranteed performance characteristics, or warranty periods). There may be multiple possible contract instances equivalent for the manufacturer of the technical system, each of which specifies these parameters. Choosing the one which brings the highest value for the customers is of eminent importance to ensure a high level of competitiveness of the manufacturer of the technical system offerings.
- Complex systems integrate various subsystems built by different suppliers. The manufacturer of the technical system is engaged not only in contractual relations with one end customer, but also with multiple parties (e.g. suppliers or consortium partners). Finding which supplier offering fits at best for a certain need of an end-customer is challenging. Furthermore, the manufacturer of the technical system can negotiate a contractual space with its suppliers and instantiate this contractual space according to the needs of an enduser (i.e. the customer of the manufacturer's technical system) .

The invention described herein provides an integrated approach to define families of contracts and represent them via a set of parameters and constraints, preferably expressed and processed in predicate logic in order to make them automatically processable by means of a computer. Contract instances which satisfy certain optimality criteria can thereby be derived and different alternatives can be explored. This enables decision-making as to technical or contractual alternatives maximizing the benefit for customers and the manufacturer of the technical system likewise.

Up to now, there is only limited flexibility and possibility to automatically assess contractual alternatives when entering into negotiations, which may be partly explained by the current insufficient and simplifying means of modelling and evaluating the consequences of the complex interrelations of contractual, commercial and technical aspects. Rather, persons in charge may rely on past experience and best practice (which may not be optimal for all parties involved as explained above). Hence, existing approaches tend to be overly simplified, informal and thereby do not support the complexity of today's multi-party contracts and negotiations. The used approaches lack the modelling of the complex interrelations of contractual, commercial and technical aspects.

In summary, none of the existing approaches adequately capture the complex interrelations of contractual, commercial and technical aspects such that the different contractual options can be analyzed and explored in an automatic manner.

The present invention suggests an approach to contractual agreements which represents a contractual framework with variation points for concrete values to be filled-in. The relations between the possible feasible values are given by a set of constraints (e.g. mean time to failure (MTTF) for component A can be 2000 hours at a price of 2 Mio € or 2500 hours at a price of 3 Mio € and the time to repair is 10 hours in the first case and 11 hours in the second case. In the second case extended warranty can be offered assuming that the service intervals do not exceed 6 moths.

In a first step, contractual templates are described. A contractual template is a contract with placeholders for specific values and a set of constraints about the valid combination of the values of the placeholders. The constraints can be arbitrary logical formula involving also arithmetic.

### Examples:

Template: Component A can be offered at costs of *COST* with warranties *WARRANTY* and mean time to failure of *MTTF*. Possible values for *COST* are C1 = 2 Mio€ and C2 = 3 Mio€ respectively.

Possible values for *WARRANTY* are W1 = 110 Months, W2 = 130 Months, W3 = 130 months with looping, W4 = 200 Months with penalty of 1000€ for each additional hour of delay of the train caused by the failure of Component A which exceeds the first 10 hours.

Possible values for *MTTF* are M1 = 1000 hours, M2 = 1300 hours, M3 = 2000 h.

Constraints: for the Component A the following configurations are possible:
- C1 and W1 and M2; C2 and W1 and M3; C2 and W2 and M1.
- C2 and W3 and M1 if component X from supplier Y has been chosen
- C2 and W4 and M1 if additional *SERVICE* contract has been chosen. The product can be substantially better if additional servicing contracts can be entered.

In a second step, valid contracts instances are synthesized which respect to certain criteria and constraints, received via an input interface. Thus, the constraints are also processed in a formalized manner.

Examples: generate all contracts containing technical solutions such that the cost per unit is between 20 and 25 M€, and the warranty is longer than 10 years

In a third step, the contracts are valuated and aligned with customer optimality criteria to identify the optimal configuration for all parties involved.

Examples: From the space of valid contracts, the customer prefers and closes a contract which provides components with a high MTTF, because his specific (customer) application is mission critical and incurs high costs in case of downtimes. If the customer closes additional contracts (e.g. for servicing) then the offer for the technical system can be more convenient. For other applications by the customer, he may prefer other technical or contractual alternatives.

In a fourth step, the contracts are fixed and it is entered into the contracts according to the chosen optimal parameters.

Thus, based on a contract template, a synthesizer generates concrete possible contracts which are then valuated by an evaluation engine. The result of the valuation (being used in this application as synonym to evaluation) is the ordering of contracts according to an optimality function, e.g. the total cost of the system at acquisition, the total costs of the system calculated over the next 20 years of its service.

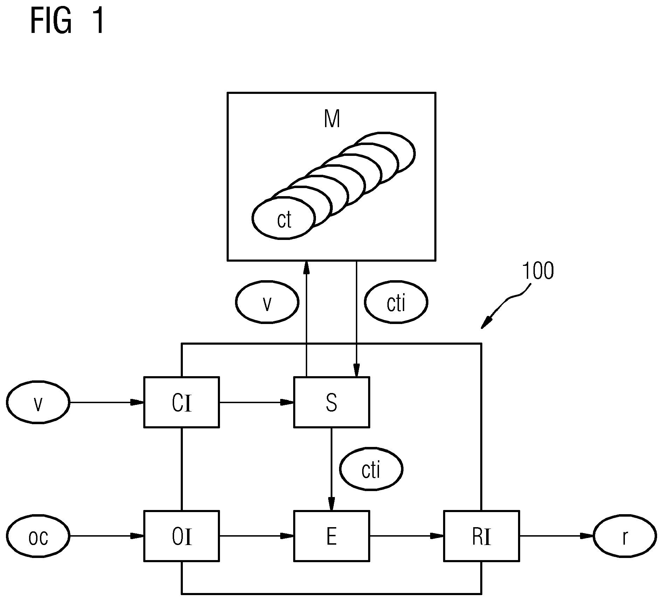

**Fig. 1** shows a preferred implementation of the contract optimization system 100. The contract optimization system 100 serves to calculate and provide at least one optimized contractual template instance, wherein the optimization criteria may be determined on the fly and currently.

The contract optimization system 100 is in data exchange with a modelling unit M, which is adapted to provide a set of contractual templates, which serve as instantiation of contract families, represented by the same constraints.

The contract optimization system 100 may comprise three different interfaces for input/output services and in particular for receiving and providing different types of digital data. A first interface may be implemented as a parameter interface CI which serves to receive values for a pre-definable set of contractual parameters. A second interface may be implemented as an optimization interface OI which serves to receive optimization criteria oc. The optimization criteria oc may be provided by the user in an ad-hoc manner or may be calculated automatically from other data sets. A result interface RI is provided for providing a result r in the form of one or more optimized contractual template instance. After having received the values v for the constraints, a synthesizer S is accessed, which is an electronic subunit of the contract optimization system 100 and which serves to generate a GET instruction to access the modelling unit M with the received values v in order to get or receive contractual template instances cti which meet the constraints and parameter values v. After the synthesizer S has provided the contractual template instances cti, an evaluation engine E is accessed which is also an electronic subunit of the contract optimization system 100 and which serves to calculate one or more optimized contractual template instances as a final result r.

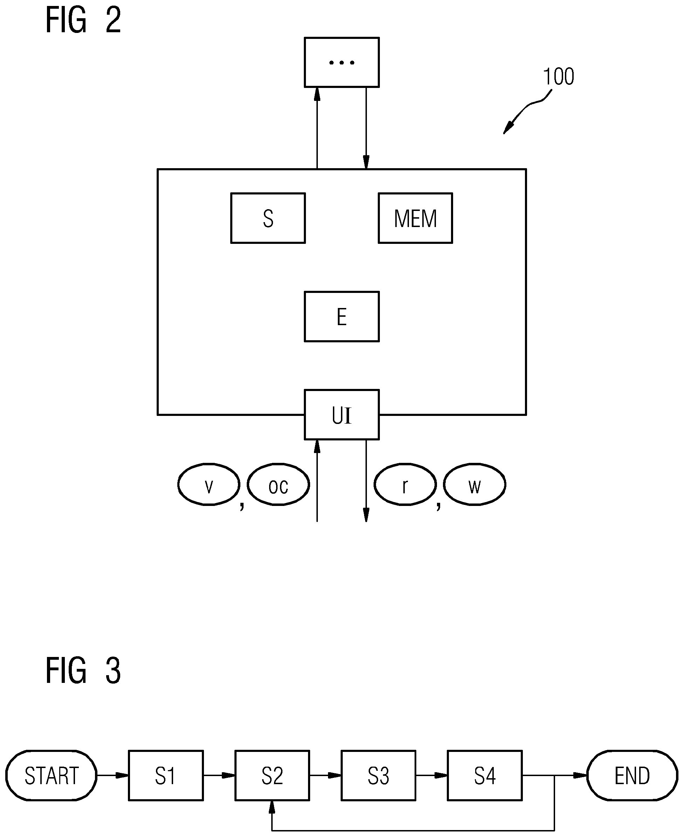

**Fig. 2** shows another preferred embodiment of the contract optimization system 100 which is in data exchange with other computer instances or electronic devices, in particular with the modelling unit M (not explicitly shown in Fig. 2). The contract optimization system 100 may - in this example - have a first interface to the modelling unit M and a second interface, which may be implemented as user interface UI. The user interface UI serves to receive the values v for the parameters, the optimization criteria oc and in addition serves to provide the result r and optionally a warning message w in case of inconsistent user input or any other calculated inconsistencies. The contract optimization system 100 in this case comprises a storage or memory MEM for storing a set of contractual templates ct and/or contractual template instances for respective values v. The synthesizer S and the evaluation engine E may be provided as in the example embodiment, described above with respect to Fig. 1.

**Fig. 3** is a flow chart of an optimization method according to a preferred embodiment of the present invention. After START of the method, in step S1 the modelling unit M is accessed, which serves to provide the digitally modelled contracts. In step S2 values v for the contractual parameters are received. In step S3 the synthesizer may access the modelling unit M for getting contractual template instance cti which comply with the received parameter values v. Alternatively, the contract optimization system 100 has already accessed the modelling unit M and the synthesizer S serves to aggregate and synthesize the corresponding contractual template instances cti (corresponding to values v and/or further requirements). In step S4, the evaluation engine E may be deployed to execute an optimality function and in particular a pareto frontier of the received optimality criteria, equally as already explained with respect to Fig. 1. After the step S4 the method may end or may be iterated again with step S2.

Sometimes, there is no "best" solution (for the supplier) with respect to technical or contractual alternatives. However, a so called Pareto optimum may exist, which needs to be determined and calculated by means of using statistical and computational tools. The pareto optimum refers to a set of contractual template instances cti, in which one requirement or contractual condition is changed that makes at least one parameter better off without making any other parameter worse off. Thus, according to a preferred embodiment of the present invention, an optimization algorithm is executed in order to find the optimum result r. The optimization algorithm may be based on processing a pareto optimum.

In sum, the proposed solution provides the possibility to create templates of contracts (both for financial and for technical aspects) in order to enable the definition of contract families. Secondly, the possibility is described to specify constraints which define the space of valid contracts. Thirdly, a synthesizer is used to create valid instances of these contracts. Lastly, the commercial consequences of these contracts are evaluated using a computational evaluation engine (e.g. by using simulation).

Contract instances which satisfy certain optimality criteria can thereby be automatically derived and different alternatives can be explored. This enables decision-making as to technical or contractual alternatives maximizing the benefit for customers and the manufacturer of the technical system likewise, as a basis for negotiations with customers and suppliers. This is highly relevant predominantly for, but not limited to, project business of various Business Units.

The result r provided and calculated according to the invention considers that all of the above mentioned requirement-based (contractual, commercial) and technical aspects are to a large extent interrelated.

The invention described herein provides an integrated approach that is capable of dealing with these difficulties.

In sum the invention refers to methods and systems with an approach for optimizing contractual conditions in view of a technical system T. A set of modelled contractual templates ct is modelled commonly within on single model, which makes it possible to process interdependencies between the contractual conditions and constraints. A technical advantage of this common modelling is to reduce redundant processing, because all the input data may be processed in common in one data processing tool. Moreover, commonalities between different contracts and technical solutions are explicit and further, storage capacity may be reduced.

In the drawings the invention has been described with respect to exemplary embodiments of the invention, namely for a railway system T. However, many variations and modifications can be made to these embodiments without substantially departing from the principles of the present invention. Accordingly, although specific terms are employed, they are used in a generic and descriptive sense only and not for purposes of limitation. Thus, it is possible to apply the approach for optimizing contractual template instances cti in view of a technical system T not only for railway systems, but also to any other kind of technical system (e.g. to power plants).

The scope of protection of the present invention is specified by the appended claims and is not restricted by the features explained in the description or shown in the drawing.

## Claims

1. Computer-implemented method for automatically calculating optimized contractual template instances for a contract for a technical system between contracting parties, wherein the method comprises:
- Accessing (S1) a modelling unit (M), which is adapted to provide modelled contracts with a set of contractual templates (ct), wherein each contractual template (ct) has a set of parameters and a set of constraints;
- Providing a parameter interface (CI) for receiving (S2) values (v) for the parameters;
- Accessing a synthesizer (S) for synthesizing (S3) a set of contractual template instances (cti) which comply with the received values (v);
- Receiving optimization criteria (oc);
- Accessing an evaluation engine (E) with the received optimization criteria for optimizing (S4) the set of synthesized contractual template instances in order to calculate at least one optimized contractual template instance as a result (r).

2. Method according to claim 1, wherein the contractual template (ct) is parameterized and comprises mutual dependencies between modelled contractual constraints and conditions with implications on the technical system.

3. Method according to any of the preceding claims, wherein each of the contractual templates (ct) represents different configurations of the technical system.

4. Method according to any of the preceding claims, wherein the contractual template (ct) is functional in that it may be used by a processor by applying received values (v) for constraints to provide a set of contract template instances (cti), which are constraint compliant.

5. Method according to any of the preceding claims, wherein the contractual template instance (cti) is generated by using stored rules of a rules engine and a stored decision logic.

6. Method according to any of the preceding claims, wherein the contractual template (ct) comprises a sequence of electronic forms for inputting constraints values (v).

7. Method according to the directly preceding claim, wherein the sequence of electronic forms is generated dynamically in dependence of input of parameter values (v) such that electronic forms are generated in dependence of prior input of parameter values (v).

8. Method according to any of the preceding claims, wherein optimizing (S4) in the evaluation engine (E) is executed by means of an evaluation algorithm, which may execute a predefined optimality function.

9. Method according to the directly preceding claim, wherein the evaluation algorithm is designed to find a pareto frontier for all contracting parties.

10. Method according to any of the preceding claims, wherein the values (v) for the parameters comprise configuration parameters for the technical system and particularly comprise a mean time to failure parameter (MTTF), a cost parameter, a warranty parameter, an availability parameter, parameters reflecting operational conditions, parameters reflecting different quality of service attributes, parameters reflecting financial liabilities.

11. Method according to any of the preceding claims, wherein a warning message (w) is issued in case of incompatible constraints and/or parameter values and/or in case of violation with pre-definable security and safety requirements of the technical system.

12. Computer program, tangibly embodied in a machine-readable storage medium, including instructions operable to cause a computer to perform the method steps according to any of the method claims above.

13. Contract optimization system (100) for automatically calculating optimized contractual template instances for a contract for a technical system between contracting parties, with:
- An interface to a modelling unit (M), wherein the modelling unit (M) is adapted to model contracts, for providing a set of contractual templates (ct), wherein each contractual template (ct) has a set of parameters and a set of constraints;
- A parameter interface (CI) for receiving values (v) for parameters;
- A synthesizer (S) which is adapted to access the modelling unit (M) with received values (v) for constraints to synthesize a set of contractual template instances (cti) which comply with the received parameter values (v);
- An optimization interface (OI) for receiving optimization criteria (oc);
- An evaluation engine (E) which is adapted to be executed with the received optimization criteria (oc) for optimizing the set of contractual template instances (cti) in order to calculate at least one optimized contractual template instance as a result (r).

14. Contract optimization system (100) according to the directly preceding claim, wherein the technical system is a traffic engineering system and in particular a railway system.
